# EUROPEAN PATENT SPECIFICATION

(11) **EP 3 109 068 B1**
(45) Date of publication and mention of the grant of the patent: **10.07.2019**
(21) Application number: 14883035.9
(22) Date of filing: 12.12.2014
(51) Int. Cl.: B60C 15/04, B60C 15/06, B60C 17/00, B60C 13/00, B60C 15/024

(54) **RUN-FLAT TIRE**
NOTLAUFREIFEN
PNEU À AFFAISSEMENT LIMITÉ

(30) Priority: 20.02.2014 JP 2014031078
(43) Date of publication of application: 28.12.2016
(73) Proprietor: Bridgestone Corporation, Tokyo 104-8340 (JP)
(72) Inventor: SAKURAI, Kenichi, Tokyo 104-8340 (JP)
(74) Representative: Oxley, Robin John George
(86) International application number: PCT/JP2014/083049
(87) International publication number: WO 2015/125387

(56) References cited:
- WO-A1-2014/199756
- JP-A- H0 415 111
- JP-A- H0 415 111
- JP-A- H0 920 110
- JP-A- 2000 190 715
- JP-A- 2000 198 327
- JP-A- 2000 198 327
- JP-A- 2001 225 614
- JP-A- 2004 017 668
- JP-A- 2005 126 555
- JP-A- 2007 039 015
- JP-A- 2009 126 262
- JP-A- 2009 173 831
- JP-A- 2010 111 173
- JP-A- 2014 226 980

## Description

### Technical Field

The present invention relates to a run-flat tire.

### Background Art

Side reinforcement types of run-flat tires, in which tire side portions are reinforced by side reinforcing rubber, are known as run-flat tires capable of running safely over a specific distance, even in a state in which the internal pressure is reduced due to puncturing, or the like (see, for example, Japanese Patent Application Laid-Open (JP-A) No. 2012-116212). Attention is also drawn to the disclosures of JP 2010-111173 A showing the features of the preamble of claim 1, JP H04-15111 A and JP 2009-173831 A.

### SUMMARY OF INVENTION

### Technical Problem

However, when a slip angle (SA) has been applied to a side reinforcement type of run-flat tire such as by the vehicle turning during running in a state of reduced internal pressure (during run-flat running), a buckling phenomenon sometimes occurs in which a tire side portion bends by folding in toward the tire inside. There is a concern of rim detachment, in which a bead portion detaches from a rim seat of a rim, and of damage occurring to the side reinforcing rubber, when the buckling phenomenon occurs in the tire side portion.

An issue of the present invention is to provide a run-flat tire capable of suppressing rim detachment and damage to side reinforcing rubber, even when a buckling phenomenon occurs in a tire side portion.

### Solution to Problem

A run-flat tire of a first aspect of the present invention includes: a pair of bead portions in which a bead core is embedded and that have a bead heel diameter that is from 0.42% to 0.72% smaller than a rim diameter of a standard rim; a carcass that spans a region between the pair of bead portions and that has an end portion side anchored to the bead core; bead filler that extends from the bead core toward a tire radial direction outer side so as to run along an outer face of the carcass; and side reinforcing rubber that is provided at tire side portions connected to the bead portions, that extends in the tire radial direction along an inner face of the carcass, that has an end portion at a side of the bead core overlapping the bead filler with the carcass therebetween, and that has elongation at break of 130% or greater, wherein, as viewed in a tire width direction cross-section, a straight line linking a bead toe point for measuring a bead toe diameter of the bead portions, and a bead heel point for measuring the bead heel diameter of the bead portions, is inclined within a range of from 12.2° to 14.7° with respect to a tire width direction. Note that "bead heel diameter" referred to herein refers to the diameter of a circle formed coupling together bead heel points in a tire circumferential direction in order to measure the bead heel diameter. As viewed in a tire width direction cross-section, in cases in which an outer outline of the bead heel of each bead portion is formed in a curved line, "bead heel point" refers to an intersection point between a tangent line to an outer outline at a bead base face side end of the outer outline of the bead heel and a tangent line to an outer outline at a bead back face side end of the outer outline of the bead heel. In cases in which an outer outline of the bead heel is formed angulated, "bead heel point" refers to an apex point at which the outer outline at the bead base face side of the outer outline of the bead heel, and the outer outline at the bead back face side of the outer outline of the bead heel, intersect (namely, the angulated point of the outer outline of the bead heel). When mounted to a standard rim, "bead base face" refers to a tire radial direction inner side face of each bead portion that contacts a bead seat of the standard rim. When mounted to a standard rim, "bead back face" refers to a tire width direction outer side face of each bead portion that contacts a rim flange. Moreover, "standard rim" refers to a standard rim of the appropriate size as specified in the Year Book of the Japan Automobile Tire Manufacturers Association (JATMA), these being the Industrial Standards, and "rim diameter" refers to the rim diameter specified in the JATMA Year Book.

Moreover, "bead toe diameter" referred to herein refers to the diameter of a circle formed coupling together bead toe points in the tire circumferential direction in order to measure the bead toe diameter. As viewed in a tire width direction cross-section, in cases in which an outer outline of the bead toe of each bead portion is formed in a curved line, "bead toe point" refers to an intersection point between a straight extension line of the bead base face at the bead base face side end of the outer outline of the bead toe and a straight extension line of a bead inner face at a bead inner face side end of the outer outline of the bead toe. In cases in which the outer outline of the bead toe is formed angulated, "bead toe point" refers to an apex point at which the outer outline at the bead base face side of the outer outline of the bead toe, and the outer outline at the bead inner face side of the outer outline of the bead toe, intersect (namely, the angulated point of the outer outline of the bead toe).

Moreover "bead core inner diameter" referred to herein refers to the diameter of a circle formed coupling together ends that are furthest toward the tire radial direction inner side of the bead core in the tire circumferential direction.

### Advantageous Effects of Invention

The present invention can provide a run-flat tire capable of suppressing rim detachment and damage to the side reinforcing rubber, even when a buckling phenomenon occurs in the tire side portion.

### BRIEF DESCRIPTION OF DRAWINGS

Fig. 1 is a tire half cross-section illustrating one side of a cross-section of a run-flat tire according to an exemplary embodiment of the present invention, sectioned along a tire width direction.
Fig. 2 is an enlarged tire width direction cross-section, illustrating the vicinity of a bead portion of the run-flat tire in Fig. 1.
Fig. 3 is a tire side-on view viewed from the tire width direction, illustrating a state of the run-flat tire in Fig. 1 during run-flat running.
Fig. 4 is a tire width direction cross-section of a tire side portion of the run-flat tire in Fig. 1, illustrating a state in which a buckling phenomenon has occurred.
Fig. 5 is a graph illustrating a relationship between a rim detachment index at the vehicle turning inside and a rim detachment index at the vehicle turning outside.

### DESCRIPTION OF EMBODIMENTS

Explanation follows regarding an exemplary embodiment of a run-flat tire of the present invention, with reference to the drawings.

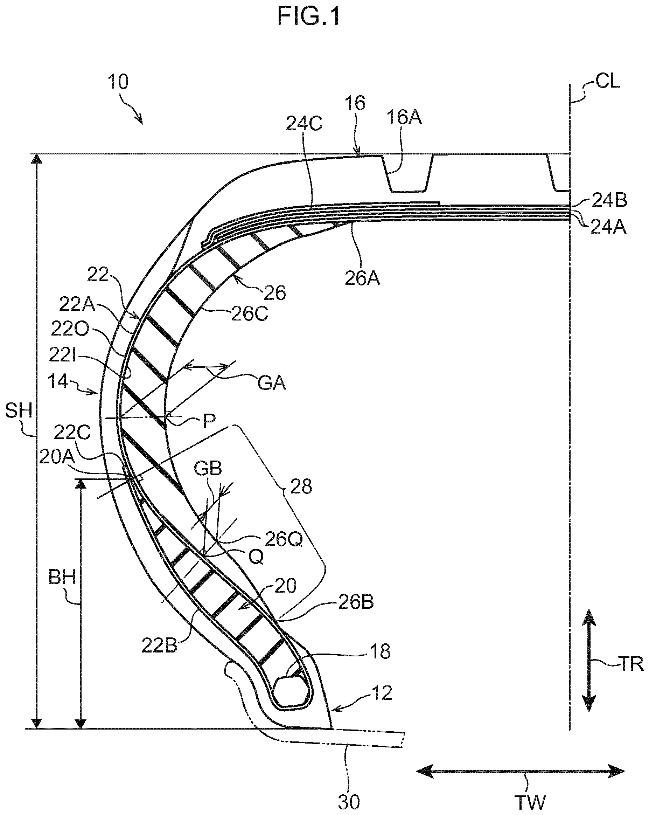

Fig. 1 is a cross-section illustrating one side of a run-flat tire 10 (hereinafter referred to as "tire 10") of the present exemplary embodiment, sectioned along a tire width direction. In the drawings, the arrow TW indicates the width direction of the tire 10 (tire width direction), and the arrow TR indicates a radial direction of the tire 10 (tire radial direction). The tire width direction referred to herein refers to a direction parallel to the rotation axis of the tire 10, and is also referred to as a tire axial direction. The tire radial direction is a direction orthogonal to the rotation axis of the tire 10. The label CL indicates an equator of the tire 10 (a tire equator).

Moreover, in the present exemplary embodiment, the rotation axis side of the tire 10 along the tire radial direction is referred to as the "tire radial direction inner side", and the opposite side to the rotation axis of the tire 10 along the tire radial direction is referred to as the "tire radial direction outer side". The tire equator CL side along the tire width direction is referred to as the "tire width direction inner side", and the opposite side to the tire equator CL along the tire width direction is referred to as the "tire width direction outer side".

Fig. 1 illustrates the tire 10 mounted to a standard rim 30 (illustrated by double-dotted dashed lines in Fig. 1) when inflated to a standard air pressure. The standard rim referred to herein refers to a standard rim of the appropriate size as specified in the 2014 edition of the Japan Automobile Tire Manufacturers Association (JATMA) Year Book. The above standard air pressure is the air pressure corresponding to the maximum load capacity in the 2014 edition of the JATMA Year Book.

Note that in the following explanation, the load is the maximum load (maximum load capacity) for a single wheel of the appropriate size as listed in the following Standards. The internal pressure is the air pressure corresponding the maximum load (maximum load capacity) for a single wheel listed in the following Standards. Moreover, the rim is a standard rim (or "Approved Rim", "Recommended Rim") of the appropriate size as listed in the following Standards. The Standard is determined according to current Industrial Standards prevailing in the region of tire manufacture or use. For example, as stipulated in "The Year Book of the Tire and Rim Association Inc." in the United States of America, in the "Standards Manual of the European Tyre and Rim Technical Organisation" in Europe, and in the "JATMA Year Book" of the Japan Automobile Tire Manufacturers Association in Japan.

As illustrated in Fig. 1, the tire 10 includes a left and right pair of bead portions 12 (only the bead portion 12 at one side is illustrated in Fig. 1), a pair of tire side portions 14 respectively extending from the pair of bead portions 12 toward the tire radial direction outer side, and a tread portion 16 extending from one tire side portion 14 to the other tire side portion 14. The tire side portions 14 bear load acting on the tire 10 during run-flat running.

The tire 10 of the present exemplary embodiment is a tire with an aspect ratio of 55% or greater, and is set with a tire cross-section height (tire section height) SH of 115 mm or greater. The section height (tire cross-section height) SH referred to herein refers to a length of 1/2 the difference between the tire outer diameter and the rim diameter in a state in which the tire 10 is fitted to the standard rim 30 with an internal pressure of the standard air pressure. Note that, although the tire 10 of the present exemplary embodiment is set with an aspect ratio of 55% or greater and a tire cross-section height SH of 115 mm or greater, the present invention is not limited to this configuration.

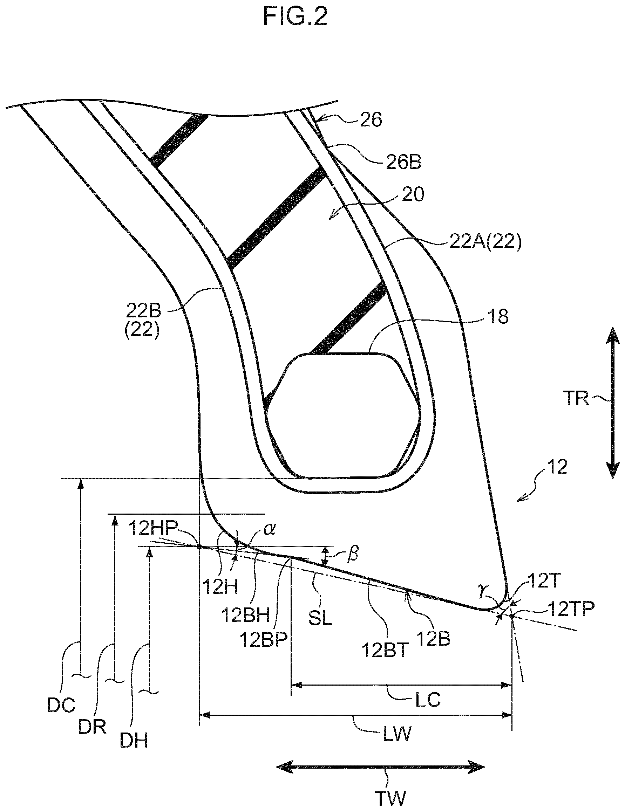

As illustrated in Fig. 2, outer outlines of a bead heel 12H and a bead toe 12T of each bead portion 12 are each formed in a curved line in tire width direction cross-section view. Note that the present invention is not limited to this configuration, and the outer outline of either the bead heel 12H or the bead toe 12T may be formed angulated. The bead heel 12H is positioned further toward the tire radial direction outer side than the bead toe 12T.

In tire width direction cross-section view, a diameter of the bead heel 12H (hereafter referred to as "bead heel diameter DH") is set from 0.42% to 0.72% smaller than a rim diameter DR of the standard rim 30. A straight line SL linking a bead heel point 12HP and a bead toe point 12TP is inclined at an angle α with respect to the tire width direction. Note that the angle α indicates the angle on the acute angle side, and is set within a range of from 12.2° to 14.7°.

In tire width direction cross-section view, of the outer outlines of the bead portion 12, the outer outline of a bead base corresponding to a bead base face 12B includes a straight line shaped bead toe side portion 12BT, and a curved line shaped bead heel side portion 12BH that is coupled to the bead toe side portion 12BT at a coupling point 12BP. The bead toe side portion 12BT is inclined at an angle β with respect to the tire width direction. The angle β indicates the angle on the acute angle side, and is set within a range of from 17.5° to 19.5°. Note that in the present exemplary embodiment, as illustrated in Fig. 2, the bead heel side portion 12BH is part of the curved line shaped portion forming the outer outline of the bead heel 12H, the coupling point 12BP is an end of the curved line shaped portion of the bead heel 12H, and the bead toe side portion 12BT is inclined toward the tire radial direction inner side from the coupling point 12BP as far as the curved line shaped portion of the bead toe 12T. The bead toe point 12TP is preferably positioned on an extension line of the bead toe side portion 12BT. Note that the bead heel side portion 12BH may have a straight line shape, and in cases in which the bead heel side portion 12BH does have a straight line shape, the respective inclines of the bead heel side portion 12BH and the bead toe side portion 12BT are different from each other.

In tire width direction cross-section view, a distance LC measured along the tire width direction from the bead toe point 12TP to the coupling point 12BP is set at 50% or greater of a distance LW measured along the tire width direction from the bead toe point 12TP to the bead heel point 12HP. The coupling point 12BP is disposed so as to be positioned at the tire radial direction inner side of a bead core 18, described below. An angle γ of the bead toe point 12TP is set at 30° or greater.

As illustrated in Fig. 1, the bead cores 18 are respectively embedded into the pair of bead portions 12. A carcass 22 spans a region between the pair of bead cores 18. End portion sides of the carcass 22 are anchored by the bead cores 18. In the present exemplary embodiment, each end portion side of the carcass 22 is folded back around the respective bead core 18 from the tire inside toward the tire outside and anchored thereto, and an end portion 22C of each folded-back portion 22B contacts a carcass main body portion 22A. Note that in the present exemplary embodiment, each end portion 22C of the carcass 22 is disposed in a range (region) corresponding to the respective tire side portion 14; however, the present invention is not limited to this configuration. For example, each end portion 22C of the carcass 22 may be disposed in a range corresponding to the tread portion 16, and in particular, a range corresponding to belt layers 24A.

The carcass 22 configures a frame of the tire 10, extending in a toroidal shape from one bead core 18 to the other bead core 18.

Plural (two in the present exemplary embodiment) belt layers 24A are provided at the tire radial direction outer side of the carcass main body portion 22A. A cap layer 24B is provided at the tire radial direction outer side of the belt layers 24A. The cap layer 24B entirely covers the belt layers 24A.

A pair of layering layers 24C are provided at the tire radial direction outer side of the cap layer 24B so as to respectively cover both end portions of the cap layer 24B. Note that the present invention is not limited to this configuration, and may be configured such that only one side end portion of the cap layer 24B is covered by a layering layer 24C, or may be configured such that both end portions of the cap layer 24B are covered by a single layering layer 24C that is continuous along the tire width direction. The layering layers 24C may be omitted in accordance with specifications of the tire 10.

The structure of respective members employed in a conventionally known run-flat tire may be employed as the carcass 22, the belt layers 24A, the cap layer 24B, and the layering layers 24C.

Each bead portion 12 is embedded with bead filler 20 extending from the bead core 18 toward the tire radial direction outer side along an outer face 22O of the carcass 22. In the present exemplary embodiment, the bead filler 20 is disposed in a region enclosed by the carcass main body portion 22A and each folded-back portion 22B. Note that the outer face 22O of the carcass 22 is a face at the tire outside of the carcass main body portion 22A, and a face at the tire inside of the folded-back portion 22B. In the present exemplary embodiment, an end portion 20A at the tire radial direction outer side of the bead filler 20 enters the tire side portion 14. The thickness of the bead filler 20 decreases on progression toward the tire radial direction outer side.

As illustrated in Fig. 1, a height BH of the bead filler 20 is set within a range of from 30% to 50% of the tire cross-section height SH. Note that the height BH of the bead filler 20 referred to herein refers to the height (length along the tire radial direction) from the respective end portion 20A at the tire radial direction outer side of the bead filler 20 to a leading end of the bead portion 12, in a state in which the tire 10 is fitted to the standard rim 30 with an internal pressure of the standard air pressure. In cases in which the height BH of the bead filler 20 is less than 30% of the tire cross-section height SH, sufficient durability cannot be secured during run-flat running. In cases in which the height BH of the bead filler 20 is greater than 50% of the tire cross-section height SH, there is a deterioration in ride quality. Thus, the height BH of the bead filler 20 is preferably set within a range of from 30% to 50% of the tire cross-section height SH.

In the present exemplary embodiment, the end portion 20A of the bead filler 20 is disposed further to the tire radial direction inner side than a maximum width position of the tire 10. Note that the maximum width position of the tire 10 referred to herein refers to a position with the widest width along the tire width direction of the tire 10.

The tread portion 16 is provided at the tire radial direction outer side of the belt layers 24A, the cap layer 24B, and the layering layers 24C. The tread portion 16 is a location that makes contact with the road surface when running, and plural circumferential direction grooves 16A are formed extending along the tire circumferential direction in a tread face of the tread portion 16. Width direction grooves, not illustrated in the drawings, are formed extending in the tire width direction in the tread portion 16. The shape and number of the circumferential direction grooves 16A and the width direction grooves are set as appropriate according to the performance required of the tire 10, such as water dispelling performance and steering stability.

A side reinforcing rubber 26, serving as an example of a side reinforcing layer that reinforces each tire side portion 14 at the tire width direction inner side of the carcass 22, is laid up at each tire side portion 14. The side reinforcing rubber 26 is reinforcing rubber to allow running for a specific distance in a state in which the weight of the vehicle and the occupants is supported in cases in which the internal pressure of the tire 10 has decreased, due to puncturing or the like.

The side reinforcing rubber 26 extends in the tire radial direction along an inner face 221 of the carcass 22, from the bead core 18 side toward the tread portion 16 side. The side reinforcing rubber 26 is formed in a shape that decreases in thickness on progression toward the bead core 18 side and toward the tread portion 16 side, such as a substantially crescent moon shape. The thickness of the side reinforcing rubber 26 referred to herein refers to a length along a normal line to the carcass 22, in a state in which the tire 10 has been fitted to the standard rim 30 with an internal pressure of the standard air pressure.

An end portion 26A at the tread portion 16 side of each side reinforcing rubber 26 overlaps the tread portion 16 with the carcass 22 (carcass main body portion 22A) interposed therebetween. Specifically, the end portion 26A of the side reinforcing rubber 26 overlaps the belt layers 24A. An end portion 26B at the bead core 18 side of each side reinforcing rubber 26 overlaps the respective bead filler 20 with the carcass 22 (carcass main body portion 22A) interposed therebetween.

The elongation at break of the side reinforcing rubber 26 is set within a range of from 130% to 190%. Note that "elongation at break" referred to herein indicates elongation at break (%) measured based on JIS K6251 (employing dumbbell-shaped No. 3 test pieces). Although the side reinforcing rubber 26 of the present exemplary embodiment is configured of a single type of rubber material, the present invention is not limited to this configuration, and the side reinforcing rubber 26 may be configured of plural types of rubber material.

In the present exemplary embodiment, the side reinforcing rubber 26 with a main component of rubber is employed as an example of a side reinforcing layer; however, the present invention is not limited to this configuration, and the side reinforcing layer may be formed of another material. For example, a side reinforcing layer may be formed with a thermoplastic resin or the like as a main component. As long as the side reinforcing rubber 26 has a rubber as a main component, other materials may also be included, such as filler, short fibers, or resin.

A thickness GB of the side reinforcing rubber 26 at a center point Q along an extension direction of the carcass 22 between the end portion 20A of the bead filler 20 and the end portion 26B of the side reinforcing rubber 26 is set with a thickness within a range of from 40% to 80% of a maximum thickness GA of the side reinforcing rubber 24. Setting the thickness GB of the side reinforcing rubber 26 with a thickness from 40% to 80% or less of the maximum thickness GA in this manner enables damage (such as cracks) to be suppressed from occurring in the side reinforcing rubber 26, even supposing a buckling phenomenon has occurred in the tire side portion 14. Note that in the present exemplary embodiment, the maximum thickness GA is the thickness of the side reinforcing rubber 26 at the maximum width position of the carcass 22; however, the present invention is not limited to this configuration. The maximum width position of the carcass 22 referred to herein refers to a position of the carcass 22 that has the widest width along the tire width direction.

Moreover, in a state in which the tire 10 is fitted to the standard rim 30 with an internal pressure of the standard air pressure, a height LH from the end portion 26B of the side reinforcing rubber 26 to the leading end of the bead portion 12 is set with a height within a range of from 50% to 80% of the height BH of the bead filler 20. It becomes difficult to secure durability during run-flat running in cases in which the height LH is a height greater than 80% of the height BH, and there is a deterioration in ride quality in cases in which the height LH is a height less than 50% of the height BH. The height LH is therefore preferably set with a height within a range of from 50% to 80% of the height BH.

There is no rim guard (rim protection) provided due to the tire 10 of the present exemplary embodiment being a tire 10 having a high tire cross-section height SH; however, the present invention is not limited to this configuration, and a rim guard may be provided.

An inner liner, not illustrated in the drawings, is provided to an inner face of the tire 10, so as to span from one bead portion 12 to the other bead portion 12. In the tire 10 of the present exemplary embodiment, as an example, the main component of the inner liner is butyl rubber; however, the present invention is not limited to this configuration, and the main component of the inner liner may be another rubber material or a resin.

Explanation follows regarding effects of the present exemplary embodiment.

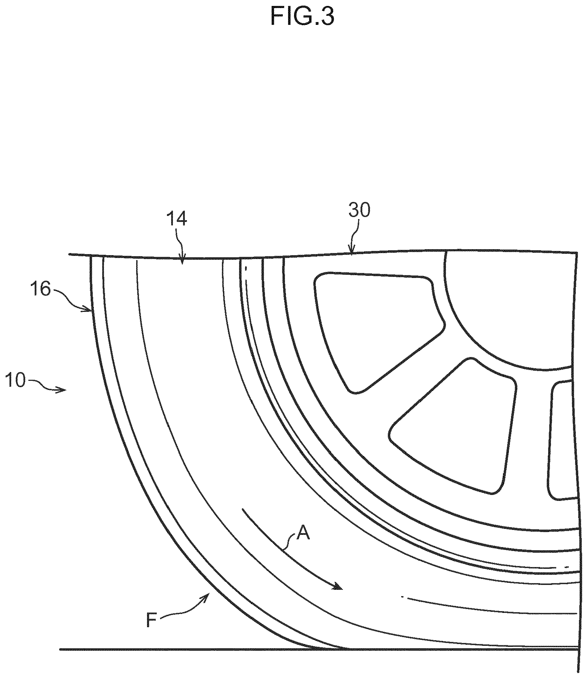

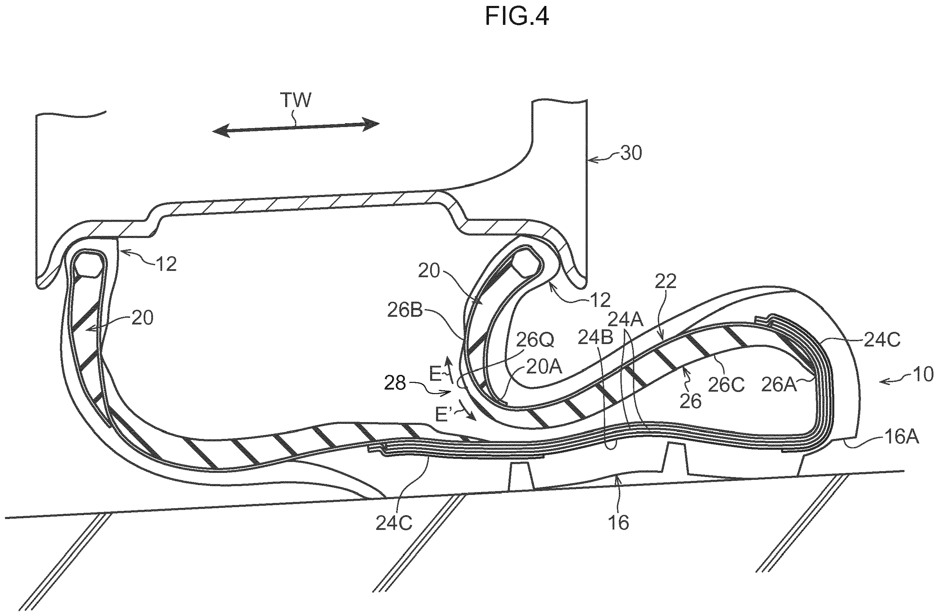

As illustrated in Fig. 3, a ground contact portion of the tire 10 enters a greatly distorted state during run-flat running. When a slip angle (SA) is applied in this state, for example by cornering, the distortion propagates toward the front side of the direction of progress of the tire 10, and a tread-in side portion F enters a greatly distorted state (note that the arrow A in Fig. 3 indicates the tire rotation direction). As a result, the tire side portion 14 positioned at the vehicle turn inside bends by folding in toward the inside of the tire 10, such that a buckling phenomenon sometimes occurs (see Fig. 4).

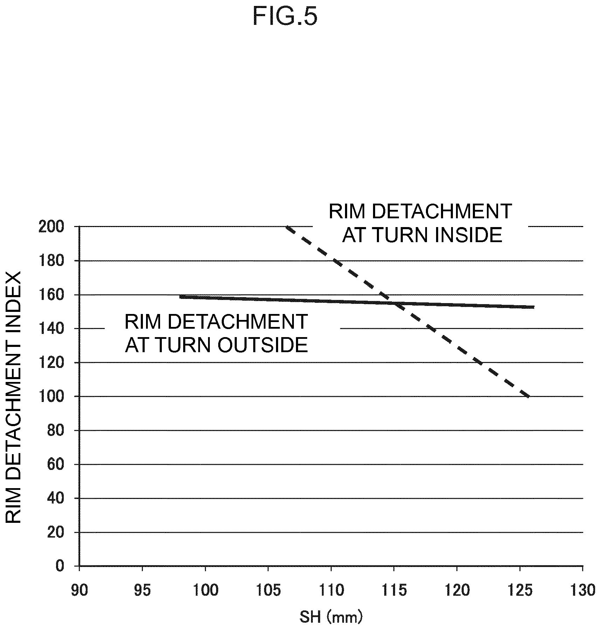

It has been confirmed that the buckling phenomenon is more liable to occur in a tire positioned at the turn inside when the tire has a tire cross-section height SH of 115 mm or greater. The graph illustrated in Fig. 5 is from an investigation into a rim detachment index with respect to tire cross-section height SH when employing tires with a tire width of 195 mm and varied tire cross-section heights SH. Since rim detachment referred to herein occurs as a result of the buckling phenomenon in the tire side portion 14, the greater the value shown in the rim detachment index, the less liable the buckling phenomenon is to occur. It is apparent from Fig. 5 that the higher the tire cross-section height SH, the smaller the value of the rim detachment index at the turn inside, and so the buckling phenomenon is more liable to occur in the tire side portion 14 at the turn inside than at the turn outside in tires with a tire cross-section height SH of 115 mm or greater.

In the tire 10, the bead heel diameter DH of the bead heel 12H is at the least 0.42% smaller than the rim diameter DR of the standard rim 30, such that the bead portions 12 are strongly restrained by the standard rim 30. Thus, even if the buckling phenomenon occurs in the respective tire side portion 14 during run-flat running, positional misalignment of the bead portions 12 can be suppressed, thereby enabling rim detachment to be suppressed.

The bead heel diameter DH of the bead heel 12H is also within a range that is at the most 0.72% smaller than the rim diameter DR of the standard rim 30. Thus, even if the buckling phenomenon occurs in the respective tire side portion 14 during run-flat running, the bead portions 12 are not excessively restrained by the standard rim 30, thereby suppressing a concentration of strain in the side reinforcing rubber 26. This enables the durability of the side reinforcing rubber 26 to be secured.

Note that in cases in which the buckling phenomenon has occurred in the respective tire side portion 14 of the tire 10, an inner face 26C of the side reinforcing rubber 26 is stretched and deformed (elongated). Deformation due to this stretching (tensile strain) is liable to become greater at an overlap portion 28 where the side reinforcing rubber 26 overlaps the bead filler 20 with the carcass 22 interposed therebetween. However, the elongation at break of the side reinforcing rubber 26 is set at 130% or greater, thereby enabling damage (breaks or cracks) to the side reinforcing rubber 26 to be suppressed. The durability of the side reinforcing rubber 26 is thereby improved.

When the elongation at break of the side reinforcing rubber 26 is too great, the hardness of the side reinforcing rubber 26 decreases, and so the thickness of the side reinforcing rubber 26 needs to be increased in order to secure run-flat durability. However, in the tire 10, the elongation at break of the side reinforcing rubber 26 is set at 190% or less, and so there is no need to excessively thicken of the side reinforcing rubber 26 in order to secure run-flat durability (durability during run-flat running), thereby enabling an excessive increase in weight to be suppressed. This enables the rolling resistance of the tire 10 while running to be reduced, and enables the fuel efficiency of the vehicle mounted with the tire 10 to be improved.

Thus, the tire 10 enables rim detachment and damage to the side reinforcing rubber 26 to be suppressed, even when the buckling phenomenon has occurred in the respective tire side portion 14.

In the tire 10, the angle α is set within a range of from 12.2° to 14.7°, thereby enabling a concentration of strain (tensile strain) at the side reinforcing rubber 26, as well as rim detachment, to be further suppressed, even when the buckling phenomenon has occurred at the respective tire side portion 14. Specifically, by setting the angle α to 12.2° or greater, the contact pressure of a portion at the bead toe 12T side of the bead portion 12 with respect to the standard rim 30 increases, thereby enabling positional misalignment of the bead portion 12 to be sufficiently suppressed, even if the buckling phenomenon occurs in the tire side portion 14, thereby enabling rim detachment to be further suppressed. By setting the angle α to 14.7° or less, the contact pressure of the portion at the bead toe 12T side does not become too great, and thus, the bead portion 12 is not excessively restrained by the standard rim 30, thereby enabling a concentration of strain in the side reinforcing rubber 26 to be further suppressed.

In the tire 10, an inner diameter DC of each bead core 18 is from 0.74% to 1.1% larger than the rim diameter DR of the standard rim 30. This enables a concentration of strain (tensile strain) at the side reinforcing rubber 26, as well as rim detachment, to be effectively suppressed, even when the buckling phenomenon has occurred in the respective tire side portion 14. Specifically, by setting the inner diameter DC to 0.74% or greater than the rim diameter DR, the bead portion 12 is not excessively restrained by the standard rim 30, even if the buckling phenomenon occurs in the tire side portion 14. This enables a concentration of strain in the side reinforcing rubber 26 to be effectively suppressed, thereby enabling the durability of the side reinforcing rubber 26 to be secured. By setting the inner diameter DC within a range that is at the most 1.1% larger than the rim diameter DR, the bead core 18 is not excessively separated from the standard rim 30, thereby enabling contact pressure of the bead portion 12 against the standard rim 30 to be secured, even if the buckling phenomenon occurs in the tire side portion 14. This enables rim detachment to be effectively suppressed

In the tire 10, the end portion 26B of the side reinforcing rubber 26 overlaps the bead filler 20 with the carcass 22 interposed therebetween, thereby increasing the rigidity of each tire side portion 14 and improving the run-flat durability.

In the tire 10, the height BH of the bead filler 20 is set at from 30% to 50% of the tire cross-section height SH, thereby enabling rim detachment to be effectively suppressed during run-flat running. Specifically, in cases in which the height BH of the bead filler 20 is less than 30% of the tire cross-section height SH, each bead portion 12 has a lower rigidity and is more liable to deform, such that rim detachment is more liable to occur when turning during run-flat running. In cases in which the height BH exceeds 50% of the tire cross-section height SH, each bead portion 12 has a higher rigidity and is less liable to deform, such that there is a concern of rim detachment of the bead portion 12 occurring when the buckling phenomenon has occurred in the respective tire side portion 14 during run-flat running. It is therefore preferable that the height BH of the bead filler 20 is set within a range of from 30% to 50% of the tire cross-section height SH.

Moreover, when the end portion 20A of the bead filler 20 is further to the tire radial direction outer side than the maximum width position of the tire 10, each tire side portion 14 has a higher rigidity and is less liable to deform, such that there is a concern of rim detachment of the bead portion 12 occurring when the buckling phenomenon has occurred in the respective tire side portion 14 during run-flat running. It is therefore preferable that the end portion 20A of the bead filler 20 is positioned further to the tire radial direction outer side than the maximum width position of the tire 10.

In the tire 10, the thickness of the side reinforcing rubber 26 decreases on progression toward the bead core 18 side and toward the tread portion 16 side, and the thickness GB of the side reinforcing rubber 26 at the center point Q of the overlap portion 28 is set at from 40% to 80% of the maximum thickness GA. There is accordingly a shorter distance from the carcass 22 to the inner face 26C of the side reinforcing rubber 26 at the center point Q of the overlap portion 28, and there is less tensile stress acting on the inner face 26C (specifically, a portion of the inner face 26C corresponding to the overlap portion 28) when the buckling phenomenon has occurred in the respective tire side portion 14. Damage to the side reinforcing rubber 26 is accordingly further suppressed. Note that, when the buckling phenomenon has occurred in the tire side portion 14, the side reinforcing rubber 26 bends by folding toward the tire inside with a point 26Q (an intersection point between a normal line passing through the center point Q (a line normal to the carcass 22) and the inner face 26C) of the inner face 26C, corresponding to the center point Q, as the center of bending. Thus, stretching occurs in the arrow E and E' directions in close proximity the point 26Q (see Fig. 4). In cases in which the thickness GB is less than 30% of the maximum thickness GA, the thickness of the side reinforcing rubber 26 in close proximity to the center point Q is excessively thin, and the rigidity of the tire side portion 14 is reduced, such that there is a concern that the run-flat durability is reduced. In cases in which the thickness GB exceeds 80% of the maximum thickness GA, the thickness of the side reinforcing rubber 26 in close proximity to the center point Q is excessively thick, and tensile stress acting on the inner face 26C when the buckling phenomenon has occurred in the tire side portion 14 cannot be sufficiently reduced. The thickness GB is therefore preferably set within a range of from 40% to 80% of the maximum thickness GA.

In tires in which the tire cross-section height SH is 115 mm or greater and the aspect ratio is 55% or greater, as in the tire 10 of the present exemplary embodiment, the buckling phenomenon is more liable to occur in the tire side portion 14 during run-flat running. Thus, by setting the elongation at break of the side reinforcing rubber 26 within a range of from 130% to 190%, damage to the side reinforcing rubber 26 due to the tire side portion 14 buckling can be effectively suppressed.

In the tire 10, since the angle β is set at 17.5° or greater, rim detachment can be effectively suppressed, even if the contact pressure at the bead toe 12T side of the bead portion 12 with respect to the standard rim 30 increases, and the buckling phenomenon occurs in the respective tire side portion 14 during run-flat running.

Since the angle β is set at 19.5° or less, the incline of the bead toe side portion 12BT is not excessively great, thus raising the rigidity of the bead toe 12T. Thus, when the tire 10 is mounted to the standard rim 30 and the bead portion 12 is made to pass over a rim flange, for example, the bead toe 12T smoothly passes over the rim flange, thereby reducing the amount of dig-in. There is accordingly no damage occurring, such as chipping of a leading end of the bead toe 12T (namely, rim assembly properties are maintained). Since the angle β is set at 19.5° or less, the contact pressure of the bead toe side portion 12BT with respect to the standard rim 30 is made uniform and the coefficient of friction improved, thereby enabling rim detachment to be effectively suppressed, even when the buckling phenomenon has occurred in the respective tire side portion 14 during run-flat running.

In the tire 10, the distance LC is set at 50% or greater of the distance LW, thereby enabling the contact pressure of the bead toe side portion 12BT against the standard rim 30 to be made even more uniform and the coefficient of friction to be further improved. This enables rim detachment to be even more effectively improved, even when the buckling phenomenon has occurred in the respective tire side portion 14.

In the tire 10, the coupling point 12BP is disposed so as to be positioned at the tire radial direction inner side of the respective bead core 18. Thus, the contact pressure of the bead portion 12 against the standard rim 30 varies between the bead heel 12H side and the bead toe 12T side with the coupling point 12BP as a boundary. However, the above-described lack of uniformity in contact pressure can be reduced by positioning the coupling point 12BP at the tire radial direction inner side of the bead core 18 that has a high rigidity.

In the tire 10, the angle γ of the bead toe point 12TP is set at 30° or greater. This improves the rigidity of the bead toe 12T, thereby enabling damage such as chipping of the bead toe 12T to be prevented when the tire 10 is mounted to the standard rim 30, for example.

In the tire 10, a textile chafer, not illustrated in the drawings, may be laid up between at least each bead core 18 and the bead base face 12B. A reinforcing cord layer, formed of a rubber-covered layer of arrayed organic fiber cords, may be employed as the textile chafer. A textile chafer may be employed in which the cords are inclined at an angle of from 30° to 60°, and preferably at an angle of 45°, with respect to the tire circumferential direction.

In the exemplary embodiment described above, each end portion side of the carcass 22 is folded back from the tire width direction inner side toward the outside around the bead core 18, and the end portion of the carcass 22 is configured anchored to the bead core 18. However, the present invention is not limited to this configuration. For example, a configuration may be applied in which the bead core 18 is divided in half, and the end portion side of the carcass 22 is interposed between the divided bead core 18, thereby anchoring the end portion of the carcass 22 to the bead core 18.

As illustrated in Fig. 1, in the exemplary embodiment described above, the side reinforcing rubber 26 is configured by one type of rubber; however, the present invention is not limited to this configuration, and the side reinforcing rubber 26 may be configured by plural types of rubber. For example, the side reinforcing rubber 26 may be configured by overlapping plural different types of rubber in the tire radial direction, or the side reinforcing rubber 26 may be configured by overlapping plural different types of rubber in the tire width direction. Note that in cases in which the side reinforcing rubber 26 is configured by overlapping plural different types of rubber in the tire radial direction, the advantageous effects of the present invention can be obtained by setting the elongation at break of the rubber at a portion of the side reinforcing rubber 26 including the center point Q within a range of from 130% to 190%. In cases in which the side reinforcing rubber 26 is configured by overlapping plural different types of rubber in the tire width direction, the advantageous effects of the present invention can be obtained by setting the elongation at break of the rubber forming the inner face 26C of the side reinforcing rubber 26 (the rubber, from out of the plural types of rubber configuring the side reinforcing rubber 26, that is furthest to the tire width direction inner side) within a range of from 130% to 190%.

An exemplary embodiment of the present invention has been explained above.

### Test Examples

In order to verify the advantageous effects of the present invention, sixteen types of run-flat radial tires (hereafter simply referred to as tires) incorporating the present invention (examples 1 to 11 and 14 to 18 below), and five types of tires of examples and comparative examples that do not incorporate the present invention (examples 12 and 13 and Comparative Examples 1 to 3 below) were prepared, and tests 1 and 2 below were performed.

First, explanation following regarding the respective tires of the examples 1 to 6, and the respective tires of the Comparative Examples 1 to 3 employed in test 1. Note that the size of each tire employed in the test is 195/65R15. The respective tires of the examples 1 to 6 each adopt the same structure as the structure of the tire 10 of the above-described exemplary embodiment, and are tires that each have a different value for "elongation at break of side reinforcing rubber", "maximum thickness GA of side reinforcing rubber", and "diameter difference X (rim diameter DR - bead heel diameter DH)". The respective tires of the Comparative Examples 1 to 3 have the same structure as the respective tires of the examples 1 to 6, but are tires for which the value of at least one out of the elongation at break of the side reinforcing rubber or the diameter difference X (rim diameter DR - bead heel diameter DH) is not incorporated in the present invention. The respective values of the examples 1 to 6 and the Comparative Examples 1 to 3 are shown in Table 1. Note that, with respect to the maximum thickness GA of the side reinforcing rubber of the examples 1 to 6, the thickness required to obtain the same run-flat durability as the Comparative Example 1 is shown as an index, with the maximum thickness GA of the Comparative Example 1 as a reference value (100). Note that the lower the value of the maximum thickness GA shown, the better the result.

Explanation follows regarding the respective tires of the examples 7 to 13 employed in test 1. The respective tires of the examples 7 to 13 each adopt the same structure as the structure of the tire 10 of the above-described exemplary embodiment, and have similar values to the example 4 for elongation at break of the side reinforcing rubber, the maximum thickness GA of the side reinforcing rubber, and the diameter difference X. The respective tires of the examples 7 to 13 are tires that have different values for both the "angle α" and "diameter difference Y (rim diameter DR - bead cord inner diameter DC)". The respective values of the examples 7 to 13 are shown in Table 1.

In test 1, first, each test tire was fitted to a standard rim according to the JATMA Standard, mounted to a vehicle without being inflated with air (internal pressure was set at 0 kPa), and broken-in by running over a distance of 5 km at a speed of 20 km/h. The vehicle then entered a circuit track with radius of curvature of 25m at a specific speed, and stopping was performed two consecutive times at a position at one third of a lap of the circuit track (J-turn test). In cases in which no damage occurred to an inner face of the side reinforcing rubber, the speed was raised by 2 km/h and testing was performed again. The J-turn test was performed in this manner until damage occurred to the inner face of the side reinforcing rubber.

Note that the entry speed when damage occurred to the inner face of the respective side reinforcing rubber of the examples 1 to 13 and the Comparative Examples 2 and 3 is shown and evaluated by an index, with the entry speed when damage occurred to the inner face of the side reinforcing rubber of the Comparative Example 1 as a reference value (100). Note that the "cracking resistance" in Table 1 and Table 2 is the entry speed when damage occurred to the inner face of the side reinforcing rubber shown as an index. The greater the value of the cracking resistance shown, the better the result.

The above J-turn test was also performed while raising the entry speed by 2 km/h, and the entry speed was measured when the bead portion detached from the rim (the hump of the rim). Note that the entry speed when the respective bead portion of the examples 1 to 13 and the Comparative Examples 2 and 3 detached from the rim is shown and evaluated as an index, with the entry speed when the bead portion of the Comparative Example 1 detached from the rim as a reference value (100). Note that the "rim detachment resistance" in Table 1 and Table 2 is the entry speed when the bead portion detached from the rim shown as an index. The greater the value of the rim detachment resistance shown, the better the result.

**Table 1**

| | Comparative Example 1 | Comparative Example 2 | Example 1 | Example 2 | Example 3 | Example 4 | Example 5 | Example 6 | Comparative Example 3 |
|---|---|---|---|---|---|---|---|---|---|
| Diameter difference X (rim diameter DR - bead heel diameter DH) [mm] | 1.6 | 2.3 | 1.7 | 1.7 | 1.7 | 2.3 | 2.9 | 1.7 | 3.0 |
| Ratio of diameter difference X with respect to rim diameter DR [%] | 0.39 | 0.57 | 0.42 | 0.42 | 0.42 | 0.57 | 0.72 | 0.42 | 0.74 |
| Elongation at break of side reinforcing rubber [%] | 125 | 125 | 170 | 190 | 200 | 170 | 170 | 130 | 170 |
| Maximum thickness GA of side reinforcing rubber | 100 | 100 | 112 | 116 | 118 | 112 | 112 | 101 | 112 |
| Cracking resistance | 100 | 90 | 118 | 128 | 133 | 110 | 102 | 101 | 80 |
| Rim detachment resistance | 100 | 123 | 110 | 110 | 110 | 123 | 128 | 110 | 130 |

**Table 2**

| | Example 7 | Example 8 | Example 9 | Example 10 | Example 11 | Example 12 | Example 13 |
|---|---|---|---|---|---|---|---|
| Angle *α*[°] | 13.4 | 12.2 | 14.7 | 13.4 | 13.4 | 12.0 | 14.9 |
| Diameter difference Y (rim diameter DR - bead core inner diameter DC) [mm] | 3.9 | 3.9 | 3.9 | 3.0 | 4.5 | 2.9 | 4.8 |
| Ratio of diameter difference Y with respect to rim diameter DR [%] | 0.96 | 0.96 | 0.96 | 0.74 | 1.1 | 0.72 | 1.2 |
| Cracking resistance | 110 | 115 | 105 | 105 | 112 | 103 | 103 |
| Rim detachment resistance | 123 | 115 | 129 | 133 | 113 | 109 | 125 |

As shown in Table 1, in the examples 1 to 6, since the ratio of the diameter difference X with respect to the rim diameter DR is within a range of from 0.42% to 0.72%, rim detachment resistance is better than in the Comparative Example 1. In the examples 1 to 6, since the elongation at break of the side reinforcing rubber is set at 130% or greater, the cracking resistance of the side reinforcing rubber is better than in the Comparative Examples 1 and 2. Note that, when the elongation at break of the side reinforcing rubber exceeds 190%, the maximum thickness GA of the side reinforcing rubber becomes thicker in order to secure run-flat durability, and so there is a tendency for the weight to increase excessively (example 3). As in the Comparative Example 3, even when the elongation at break of the side reinforcing rubber is 130% or greater, there is a tendency for cracking performance to decrease when the ratio of the diameter difference X with respect to the rim diameter DR is too great.

As shown in Table 2, in the examples 7 to 11, since the angle α is set within a range of from 12.2° to 14.7°, rim detachment resistance is better than in the example 12. In the example 13, since the angle α is greater than 14.7°, cracking resistance has decreased. It is thought that this is because the bead portion is too strongly restrained by the standard rim in the example 13.

In the examples 7 to 11, since the ratio of the diameter difference Y with respect to the rim diameter DR is within a range of from 0.74% to 1.1%, the rim detachment resistance is better than in the example 12. In the example 13, since the ratio of the diameter difference Y with respect to the rim diameter DR is larger than 1.1%, the cracking resistance has decreased. It is thought that this is because the bead portion is too strongly restrained by the standard rim in the example 13.

Explanation follows regarding the respective tires of the examples 14 to 18, employed in test 2. Note that the size of each of the tires employed in test 2 is 195/65R15. The respective tires of the examples 14 to 18 each adopt the same structure as the structure of the tire 10 of the above-described exemplary embodiment, and are tires that each have a different value for "maximum thickness GA of side reinforcing rubber", "thickness GB at center point Q of side reinforcing rubber", and "ratio of thickness GB with respect to maximum thickness GA". The respective values of the examples 14 to 18 are shown in Table 3. Note that the elongation at break of the side reinforcing rubber of each of the examples 14 to 18 was set at 170%.

In test 2, each test tire was fitted to a standard rim according to JATMA standards, and attached to a drum test machine without being inflated with air (the internal pressure was set at 0 kPa). The distance run (distance run on the rotating drum) until a tire side portion of each test tire failed was then measured, during run-flat running (straight run-flat running) at a specific speed (rotation speed), in a state pressed by the rotating drum at a radial load of 400 kgf. The respective distances run until the tire side portion of the examples 14 to 18 failed are shown and evaluated as an index, with the distance run until the tire side portion of the Comparative Example 1 failed as a reference value (100). Note that the "run-flat durability" in Table 3 shows the distance run until the tire side portion failed as an index. The greater the value of the run-flat durability shown, the better the result.

The cracking resistance of the examples 14 to 18 was evaluated by a similar method to test 1.

**Table 3**

| | Example 14 | Example 15 | Example 16 | Example 17 | Example 18 |
|---|---|---|---|---|---|
| Maximum thickness GA of side reinforcing rubber [mm] | 9 | 9 | 9 | 10 | 10 |
| Thickness GB at center point Q of side reinforcing rubber [mm] | 6 | 4 | 3.5 | 6 | 3.5 |
| Ratio of thickness GB with respect to maximum thickness GA [%] | 67 | 44 | 39 | 60 | 35 |
| Cracking resistance | 121 | 128 | 132 | 121 | 132 |
| Run-flat durability (km) | 150 | 105 | 75 | 240 | 90 |

As illustrated in Table 3, in the examples 14, 15, and 17, since the thickness GB at the center point Q of the side reinforcing rubber is within a range of from 40% to 80% of the maximum thickness GA, favorable cracking resistance was obtained, and favorable run-flat durability was also obtained. However, in the examples 16 and 18, it can be seen that, since the thickness GB at the center point Q of the side reinforcing rubber is less than 40% of the maximum thickness GA, the run-flat durability was reduced.

## Claims

1. A run-flat tire, comprising:
a pair of bead portions (12) in which a bead core (18) is embedded;
a carcass (22) that spans a region between the pair of bead portions (12) and that has an end portion (22B) side anchored to the bead core (18);
bead filler (20) that extends from the bead core (18) toward a tire radial direction outer side so as to run along an outer face (22O) of the carcass (22); and
side reinforcing rubber (26) that is provided at tire side portions (14) connected to the bead portions (12), that extends in the tire radial direction along an inner face (221) of the carcass (22), that has an end portion (26B) at a side of the bead core (18) overlapping the bead filler (20) with the carcass (22) therebetween, **characterised in that**:
the side reinforcing rubber has elongation at break of 130% or greater,
the bead portions have a bead heel diameter (DH) that is from 0.42% to 0.72% smaller than a rim diameter (DR) of a standard rim (30), and
as viewed in a tire width direction cross-section, a straight line (SL) linking a bead toe point (12TP) for measuring a bead toe diameter of the bead portions (12), and a bead heel point (12HP) for measuring the bead heel diameter (DH) of the bead portions (12), is inclined within a range of from 12.2° to 14.7° with respect to a tire width direction.

2. The run-flat tire of claim 1, wherein an inner diameter (DC) of the bead core (18) is from 0.74% to 1.1% larger than the rim diameter (DR).

3. The run-flat tire of claim 1 or claim 2, wherein the elongation at break of the side reinforcing rubber (26) is 190% or less.

4. The run-flat tire of any one of claims 1 to 3, wherein:
the side reinforcing rubber (26) decreases in thickness on progression toward the bead core (18) side and a tread portion (16) side; and
a thickness (GB) of the side reinforcing rubber (26) at a center point (Q) along the carcass (22) between an end portion (20A) at a tire radial direction outer side of the bead filler (20) and an end portion (26B) at the bead core (18) side of the side reinforcing rubber (26) is from 40% to 80% of a maximum thickness (GA) of the side reinforcing rubber (26).

5. The run-flat tire of any one of claims 1 to 4, wherein a tire cross-section height (SH) is 115 mm or greater.

## Patentansprüche

1. Notlaufreifen, der Folgendes umfasst:
ein Paar von Wulstabschnitten (12), in denen ein Wulstkern (18) eingebettet ist,
eine Karkasse (22), die einen Bereich zwischen dem Paar von Wulstabschnitten (12) überspannt und die eine Seite eines Endabschnitts (22B) aufweist, die an dem Wulstkern (18) verankert ist,
einen Kernreiter (20), der sich von dem Wulstkern (18) zu einer in Reifenradialrichtung äußeren Seite hin erstreckt, um so entlang einer äußeren Fläche (22O) der Karkasse (22) zu verlaufen, und
Seitenverstärkungsgummi (26), der an Reifenseitenabschnitten (14) bereitgestellt wird, die mit den Wulstabschnitten (12) verbunden sind, der sich in der Reifenradialrichtung entlang einer inneren Fläche (22I) der Karkasse (22) erstreckt, der einen Endabschnitt (26B) an einer Seite des Wulstkerns (18) aufweist, der den Kernreiter (20) überlappt, mit der Karkasse (22) dazwischen, **dadurch gekennzeichnet, dass**:
der Seitenverstärkungsgummi eine Bruchdehnung von 130 % oder mehr aufweist,
die Wulstabschnitte einen Wulstfersendurchmesser (DH) aufweisen, der von 0,42 % bis 0,72 % kleiner ist als ein Felgendurchmesser (DR) einer standardmäßigen Felge (30), und,
gesehen in einem Reifenbreitenquerschnitt, eine gerade Linie (SL), die einen Wulstspitzenpunkt (12TP) zum Messen eines Wulstspitzendurchmessers der Wulstabschnitte (12) und einen Wulstfersenpunkt (12HP) zum Messen des Wulstfersendurchmessers (DH) der Wulstabschnitte (12) verbindet, innerhalb eines Bereichs von 12,2° bis 14,7° in Bezug auf eine Reifenbreitenrichtung geneigt ist.

2. Notlaufreifen nach Anspruch 1, wobei ein Innendurchmesser (DC) des Wulstkerns (18) von 0,74 % bis 1,1 % größer ist als der Felgendurchmesser (DR).

3. Notlaufreifen nach Anspruch 1 oder Anspruch 2, wobei die Bruchdehnung des Seitenverstärkungsgummis (26) 190 % oder weniger beträgt.

4. Notlaufreifen nach einem der Ansprüche 1 bis 3, wobei:
der Seitenverstärkungsgummi (26) beim Fortschreiten zu der Seite des Wulstkerns (18) und einer Seite eines Laufflächenabschnitts (16) hin in der Dicke abnimmt und
eine Dicke (GB) des Seitenverstärkungsgummis (26) an einem Mittelpunkt (Q) entlang der Karkasse (22) zwischen einem Endabschnitt (20A) an einer in Reifenradialrichtung äußeren Seite des Kernreiters (20) und einem Endabschnitt (26B) des Seitenverstärkungsgummis (26) an der Seite des Wulstkerns (18) von 40 % bis 80 % einer maximalen Dicke (GA) des Seitenverstärkungsgummis (26) beträgt.

5. Notlaufreifen nach einem der Ansprüche 1 bis 4, wobei eine Reifenquerschnittshöhe (SH) 115 mm oder mehr beträgt.

## Revendications

1. Bandage pneumatique à roulage à plat, comprenant :
une paire de parties de talon (12) dans laquelle est noyée une tringle (18) ;
une carcasse (22) s'étendant sur une région située entre la paire de parties de talon (12) et comportant un côté de partie d'extrémité (22B) ancrée sur la tringle (18) ;
un bourrage sur tringle (20) s'étendant de la tringle (18) vers un côté externe, dans une direction radiale du bandage pneumatique, de sorte à passer le long d'une face externe (22O) de la carcasse (22) ; et
une gomme de renforcement latérale (26) agencée au niveau de parties latérales du bandage pneumatique (14) connectées aux parties de talon (12), s'étendant dans la direction radiale du bandage pneumatique le long d'une face interne (22I) de la carcasse (22), comportant une partie d'extrémité (26B) au niveau d'un côté de la tringle (18) chevauchant le bourrage sur tringle (20), la carcasse (22) étant située entre eux, **caractérisé en ce que** :
la gomme de renforcement latérale présente un allongement à la rupture de 130% ou plus ;
les parties de talon ont un diamètre de bout de talon (DH) inférieur de 0,42% à 0,72% à un diamètre de jante (DR) d'une jante standard (30) ; et
vue dans un section transversale, dans la direction de la largeur du bandage pneumatique, une ligne droite (SL) reliant un point de la pointe de talon (12TP), pour mesurer un diamètre de la pointe de talon des parties de talon (12), et un point de bout de talon (12HP) pour mesurer le diamètre du bout de talon (DH) des parties de talon (12), est inclinée dans un intervalle compris entre 12,2° et 14,7° par rapport à une direction de la hauteur du bandage pneumatique.

2. Bandage pneumatique à roulage à plat selon la revendication 1, dans lequel un diamètre intérieur (DC) de la tringle (18) est supérieur de 0,74°% à 1,1% au diamètre de la jante (DR).

3. Bandage pneumatique à roulage à plat selon les revendications 1 ou 2, dans lequel l'allongement à la rupture de la gomme de renforcement latérale (26) correspond à 190% ou moins.

4. Bandage pneumatique à roulage à plat selon l'une quelconque des revendications 1 à 3, dans lequel :
la gomme de renforcement latérale (26) a une épaisseur réduite lors de la progression vers le côté de la tringle (18) et un côté d'une partie de bande de roulement (16); et
une épaisseur (GB) de la gomme de renforcement latérale (26), au niveau d'un point central (Q) le long de la carcasse (22), entre une partie d'extrémité (20A) au niveau d'un côté externe, dans une direction radiale du bandage pneumatique, du bourrage sur tringle (20), et une partie d'extrémité (26B) au niveau du côté de la tringle (18) de la gomme de renforcement latérale (26) représente entre 40% et 80% d'une épaisseur maximale (GA) de la gomme de renforcement latérale (26).

5. Bandage pneumatique à roulage à plat selon l'une quelconque des revendications 1 à 4, dans lequel une hauteur en section transversale du bandage pneumatique (SH) correspond à 115 mm ou plus.
